(19) **Europäisches Patentamt**
**European Patent Office**
**Office européen des brevets**

(11) **EP 4 718 523 A1**

(12) **EUROPEAN PATENT APPLICATION**

(43) Date of publication:
**01.04.2026 Bulletin 2026/14**

(21) Application number: **25203061.4**

(22) Date of filing: **18.09.2025**

(51) International Patent Classification (IPC):
*H01M 4/134* (2010.01)     *H01M 4/38* (2006.01)
*H01M 10/0525* (2010.01)

(52) Cooperative Patent Classification (CPC):
**H01M 4/134; H01M 4/386; H01M 10/0525;**
H01M 2004/021; H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.09.2024 JP 2024167110**

(71) Applicant: **TOYOTA JIDOSHA KABUSHIKI
KAISHA**
**Toyota-shi, Aichi-ken 471-8571 (JP)**

(72) Inventors:
• **YOSHIDA, Jun**
  **Toyota-shi, Aichi-ken, 471-8571 (JP)**
• **NAKAMOTO, Hirofumi**
  **Toyota-shi, Aichi-ken, 471-8571 (JP)**
• **YUBUCHI, So**
  **Toyota-shi, Aichi-ken, 471-8571 (JP)**
• **FURUYA, Ryosuke**
  **Toyota-shi, Aichi-ken, 471-8571 (JP)**
• **WONG, Chi Kuen**
  **Toyota-shi, Aichi-ken, 471-8571 (JP)**
• **NOMOTO, Kazushige**
  **Toyota-shi, Aichi-ken, 471-8571 (JP)**

(74) Representative: **Winter, Brandl - Partnerschaft
mbB**
**Alois-Steinecker-Straße 22
85354 Freising (DE)**

(54) **ELECTRODE ACTIVE MATERIAL, ELECTRODE LAYER, AND BATTERY**

(57)    A main object of the present disclosure is to provide an electrode active material capable of suppressing the volume change of the electrode layer. The present disclosure achieves the object by providing an electrode active material including a secondary particle that is an aggregation of a plurality of primary particle, wherein the primary particle is a Si-based active material containing a Si element, and a particle size $D_{10}$ ($\mu$m) and a particle size $D_{50}$ ($\mu$m) of the secondary particle satisfy the specified formula (1).

FIG. 1

**Description**

Technical Field

The present disclosure relates to an electrode active material, an electrode layer, and a battery.

Background Art

In recent years, the development of a battery has been actively carried out. For example, the development of a battery used for battery electric vehicles (BEV), plug-in hybrid electric vehicles (PHEV), or hybrid electric vehicles (HEV) has been advanced in the automobile industry. A battery usually includes a cathode layer, an anode layer, and an electrolyte layer arranged between the cathode layer and the anode layer. Also, as an electrode active material, an active material containing a Si element (Si-based active material) has been known. For example, Patent Literature 1 discloses an anode for secondary battery containing a composite particle including a plurality of porous silicon particles and a binder.

Citation List

Patent Literature

Patent Literature 1: Japanese Patent Application Laid-Open (JP-A) No. 2024-017797

Summary of Disclosure

Technical Problem

While a Si-based active material is an active material with high capacity, the volume change along with charge and discharge is large. When the volume change along with charge and discharge is large, cracks are easily generated in the electrode layer, and when the cracks are generated, performance of the battery is easily degraded (for example, increase in resistance, and degrade in cycle properties). For this reason, it has been required to suppress the volume change due to charge and discharge in the electrode layer containing the Si-based active material.
The present disclosure has been made in view of the above circumstances and a main object thereof is to provide an electrode active material capable of suppressing the volume change of the electrode layer.

Solution to Problem

[1] An electrode active material comprising a secondary particle that is an aggregation of a plurality of primary particle, wherein

the primary particle is a Si-based active material containing a Si element; and
a particle size $D_{10}$ ($\mu$m) and a particle size $D_{50}$ ($\mu$m) of the secondary particle satisfy the below formula (1):

$$\text{Formula (1): } D_{50}/D_{10} < 3.7.$$

[2] An electrode active material comprising a secondary particle that is an aggregation of a plurality of primary particle, wherein

the primary particle is a Si-based active material containing a Si element; and
a particle size $D_{50}$ ($\mu$m) and a particle size $D_{90}$ ($\mu$m) of the secondary particle satisfy the below formula (2):

$$\text{Formula (2): } D_{90}/D_{50} < 3.7.$$

[3] An electrode active material comprising a secondary particle that is an aggregation of a plurality of primary particle, wherein

the primary particle is a Si-based active material containing a Si element; and

a particle size $D_{10}$ ($\mu$m) and a particle size $D_{90}$ ($\mu$m) of the secondary particle satisfy the below formula (3):

$$\text{Formula (3): } D_{90}/D_{10} < 15.4.$$

[4] The electrode active material according to [1], wherein the $D_{50}/D_{10}$ is 1.6 or more in the formula (1).

[5] The electrode active material according to [2], wherein the $D_{90}/D_{50}$ is 1.6 or more in the formula (2).

[6] The electrode active material according to [3], wherein the $D_{90}/D_{10}$ is 2.5 or more in the formula (3).

[7] The electrode active material according to any one of [1] to [6], wherein the primary particle is a porous particle.

[8] The electrode active material according to any one of [1] to [7], wherein the secondary particle is a particle in which the plurality of primary particle is aggregated by a binder.

[9] The electrode active material according to any one of [1] to [7], wherein secondary particle is a sintered body.

[10] An electrode layer comprising the electrode active material according to any one of [1] to [9].

[11] The electrode layer according to [10], wherein the electrode layer is an anode layer.

[12] A battery comprising a cathode layer, an anode layer, and an electrolyte layer arranged between the cathode layer and the anode layer, wherein

one of the cathode layer and the anode layer contains the electrode active material according to any one of [1] to [9].

[13] The battery according to [12], wherein the electrolyte layer is a solid electrolyte layer.

Advantageous Effects of Disclosure

The present disclosure exhibits an effect of providing an electrode active material capable of suppressing the volume change of the electrode layer.

Brief Description of Drawings

FIG. 1 is a schematic cross-sectional view exemplifying the battery in the present disclosure.

FIGS. 2A to 2C are graphs showing the results of Examples 1 to 5 and Comparative Examples 1 to 6.

FIGS. 3A to 3C are graphs showing the results of Examples 6 to 10 and Comparative Example 7.

Description of Embodiments

The electrode active material, the electrode layer and the battery in the present disclosure will be hereinafter explained in details.

A. Electrode active material

The electrode active material in the present disclosure includes a plurality of primary particles, and a secondary particle that is an aggregation of the plurality of primary particles. Also, the primary particle is a Si-based active material containing a Si element, and the particle size $D_{10}$ ($\mu$m), the particle size $D_{50}$ ($\mu$m), and the particle size $D_{90}$ ($\mu$m) of the secondary particle satisfy at least one of the below formulae (1) to (3):

$$\text{Formula (1): } D_{50}/D_{10} < 3.7$$

$$\text{Formula (2): } D_{90}/D_{50} < 3.7$$

$$\text{Formula (3): } D_{90}/D_{10} < 15.4.$$

Here, In the present disclosure, the particle size $D_{10}$, $D_{50}$, and $D_{90}$ respectively refers to 10% accumulation particle size, 50% accumulation particle size, and 90% accumulation particle size in a volume-based particle distribution by a laser diffraction particle distribution measurement device.

According to the present disclosure, since the particle size $D_{10}$, $D_{50}$, and $D_{90}$ of the secondary particle satisfy at least one of the specified formulae (1) to (3), the electrode active material can suppress the volume change of the electrode layer.

In the secondary particle in the present disclosure, the particle size $D_{10}$ ($\mu$m) and the particle size $D_{50}$ ($\mu$m)

preferably satisfy the below formula (1):

$$\text{Formula (1): } D_{50}/D_{10} < 3.7.$$

The $D_{50}/D_{10}$ is an index showing a width of distribution in the region (region of fine particle side) where the particle size is the average or less ($D_{50}$ or less). It means that the smaller the value of the $D_{50}/D_{10}$, the narrower the distribution in the region of the fine particle side. The $D_{50}/D_{10}$ may be 3.5 or less, may be 3.3 or less, may be 3.0 or less, and may be 2.7 or less. Meanwhile, the $D_{50}/D_{10}$ is, for example, 1.5 or more, may be 1.6 or more, may be 2.0 or more, and may be 2.3 or more.

Here, when the particle size of the secondary particle is small, it is presumed that the aggregation of the primary particles is insufficient. In that case, space among primary particles in the secondary particle (void of second particle) will not be sufficiently formed, and it is presumed that the expansion of the primary particle will not be sufficiently absorbed as the whole second particle. In this point, when the $D_{50}/D_{10}$ is smaller than 3.7, it is presumed that the contact points of secondary particles decrease to suppress the generation of bridges (structure where secondary particles are connected and stretched). As a result, it is presumed that the expansion of the secondary particles does not mutually conduct and the volume change of the electrode layer is suppressed. Meanwhile, when the $D_{50}/D_{10}$ is larger than 3.7, it is presumed that the generation frequency of the bridges of the secondary particles is high, the expansion of the secondary particles mutually conducts, and the volume change of the electrode layer increases.

In the secondary particle in the present disclosure, the particle size $D_{50}$ ($\mu$m) and the particle size $D_{90}$ ($\mu$m) preferably satisfy the below formula (2):

$$\text{Formula (2): } D_{90}/D_{50} < 3.7.$$

The $D_{90}/D_{50}$ is an index showing a width of distribution in the region (region of rough particle side) where the particle size is the average or more ($D_{50}$ or more). It means that the smaller the value of the $D_{90}/D_{50}$, the narrower the distribution in the region of the rough particle side. The $D_{90}/D_{50}$ may be 3.6 or less, may be 3.3 or less, may be 3.0 or less, and may be 2.7 or less. Meanwhile, the $D_{90}/D_{50}$ is, for example, 1.5 or more, may be 1.6 or more, may be 2.0 or more, and may be 2.3 or more.

Here, when the particle size of the secondary particle is large, it is presumed that the aggregation of the primary particles is sufficient, and the void of the secondary particle is also sufficient. Meanwhile, when the particle size of the secondary particle is too large, it is presumed that reaction unevenness is caused in the secondary particle, and local expansion and contraction is generated. In this point, when the $D_{90}/D_{50}$ is smaller than 3.7, it is presumed that the rough particles are easily densified in the electrode layer, the reaction starting point in the secondary particle can be widened, and as a result, the reaction unevenness can be suppressed.

In the secondary particle in the present disclosure, the particle size $D_{10}$ ($\mu$m) and the particle size $D_{90}$ ($\mu$m) preferably satisfy the below formula (3):

$$\text{Formula (3): } D_{90}/D_{10} < 15.4.$$

The $D_{90}/D_{10}$ is an index showing a width of distribution in the region from $D_{90}$ to $D_{10}$. It means that the smaller the value of the $D_{90}/D_{10}$, the narrower the distribution. The $D_{90}/D_{10}$ may be 15.0 or less, may be 13.0 or less, and may be 10.0 or less. Meanwhile, the $D_{90}/D_{10}$ is, for example, 2.0 or more, may be 2.5 or more, may be 3.0 or more, may be 5.0 or more, and may be 7.0 or more.

When the $D_{90}/D_{10}$ is smaller than 15.4, it is presumed that the contact point with electrolyte (such as a solid electrolyte) in the electrode layer improves as the whole electrode active material, and excellent ion conduction path is formed. Thus, it is considered that the local reaction can be suppressed in the electrode layer and local expansion and contraction of the electrolyte layer can be suppressed.

The electrode active material in the present disclosure may satisfy any one of the formulae (1) to (3), may satisfy any two of them, and may satisfy all three of them. Specific examples of the cases where two of the formulae are satisfied may include a case where the formulae (1) and (3) are satisfied, but the formula (2) is not satisfied, and a case where the formulae (2) and (3) are satisfied but the formula (1) is not satisfied. Incidentally, when both of the formula (1) and the formula (2) are satisfied, the formula (3) is usually also satisfied.

The particle size $D_{10}$ ($\mu$m) of the secondary particle is not particularly limited if it satisfies the above described formulae. The $D_{10}$ ($\mu$m) is, for example, 0.1 $\mu$m or more, may be 0.5 $\mu$m or more, may be 1.0 $\mu$m or more, and may be 3.0 $\mu$m or more. Meanwhile, the $D_{10}$ ($\mu$m) is, for example, 15.0 $\mu$m or less, may be 13.0 $\mu$m or less, may be 11.0 $\mu$m or less, may be 10.0 $\mu$m or less, may be 8.0 $\mu$m or less, and may be 5.0 $\mu$m or less.

The particle size $D_{50}$ (um) of the secondary particle is not particularly limited if it satisfies the above described

formulae. The $D_{50}$ ($\mu$m) is, for example, 1.0 $\mu$m or more, may be 2.0 $\mu$m or more, may be 3.0 $\mu$m or more, and may be 5.0 $\mu$m or more. Meanwhile, the $D_{50}$ ($\mu$m) is, for example, 50.0 $\mu$m or less, may be 30.0 $\mu$m or less, may be 25.0 $\mu$m or less, may be 20.0 $\mu$m or less, may be 15.0 $\mu$m or less, may be 10.0 $\mu$m or less, may be 8.0 $\mu$m or less, and may be 5.0 $\mu$m or less.

The particle size $D_{90}$ (um) of the secondary particle is not particularly limited if it satisfies the above described formulae. The $D_{90}$ ($\mu$m) is, for example, 5.0 $\mu$m or more, may be 10.0 $\mu$m or more, may be 15.0 $\mu$m or more, may be 20.0 $\mu$m or more, and may be 25.0 $\mu$m or more. Meanwhile, the $D_{90}$ ($\mu$m) is, for example, 100.0 $\mu$m or less, may be 70.0 $\mu$m or less, may be 50.0 $\mu$m or less, and may be 30.0 $\mu$m or less.

The method for adjusting the particle size of the secondary particle will be described later.

1. Primary particle

The primary particle in the present disclosure is a Si-based active material containing a Si element.

The primary particle (Si-based active material) may be a simple substance of Si, may be an alloy containing Si as a main component (Si alloy), and may be a Si oxide. The proportion of the Si element in the Si alloy is, for example, 50 mol% or more and 95 mol% or less.

The primary particle may be a solid particle. Meanwhile, the primary particle may be a porous particle including a void inside. Here, the Si-based active material including void is called a porous Si. Presence of the void can be confirmed by a SEM (scanning electron microscope) observation. Also, the void rate is not particularly limited, but for example, it is 4% or more and may be 10% or more. Also, the void rate is, for example, 40% or less and may be 20% or less. The void rate can be obtained by, for example, in the following procedures. First, a cross-sectional image of the Si-based active material is obtained by SEM. From the obtained image, a silicon portion and the void portion are distinguished using an image analyzing software, and binarized. The areas of the silicon portion and the void portion are obtained, and the void rate (%) is calculated from the below equation:

Void rate (%) = 100 * (Area of void portion)/((Area of silicon portion) + (Area of void portion))

It is preferable that the porous Si includes a lot of minute voids of which pore diameter is 100 nm or less. The voids of which pore diameter is 100 nm or less can prevent the voids from being crushed by pressing, compared to the voids of which pore diameter is larger than 100 nm. The void amount X (integrating hole volume) of the voids of which pore diameter is 100 nm or less is, for example, 0.05 cc/g or more, may be 0.10 cc/g or more, and may be 0.12 cc/g or more. Meanwhile, the void amount X is, for example, 0.40 cc/g or less. The void amount X can be obtained by, for example, a BET measurement.

It is preferable that the porous Si includes a lot of minute voids of which pore diameter is 50 nm or less. The voids of which pore diameter is 50 nm or less can further prevent the voids from being crushed by pressing compared to the voids of which pore diameter is larger than 50 nm and 100 nm or less. The void amount Y of the voids of which pore diameter is 50 nm or less is, for example, 0.05 cc/g or more, may be 0.075 cc/g or more, and may be 0.10 cc/g or more. Meanwhile, the void amount Y is, for example, 0.25 cc/g or less.

It is preferable that the porous Si includes a lot of minute voids of which pore diameter is 10 nm or less. The voids of which pore diameter is 10 nm or less can store the deposited Li with high filling rate compared to the voids of which pore diameter is larger than 10 nm, and thus the volume change due to charge and discharge can be suppressed. The void amount Z of the voids of which pore diameter is 10 nm or less is, for example, 0.015 cc/g or more, may be 0.02 cc/g or more, and may be 0.03 cc/g or more. Meanwhile, the void amount Z is, for example, 0.09 cc/g or less.

Examples of the method for producing the porous Si may include a method in which an alloy of Li with Si (LiSi alloy) is produced and then Li is removed from the LiSi alloy. The LiSi alloy may be obtained by, for example, mixing Li and Si. Examples of the method for removing Li from the LiSi alloy may include a method in which the LiSi alloy is brought into reacting with Li extracting agent. Examples of the Li extracting agent may include alcohol such as methanol and acid such as acetic acid.

The primary particle (Si-based active material) may be crystalline, and may be amorphous. When it is crystalline, the Si-based active material usually includes a Si crystal phase. Examples of the Si crystal phase may include a diamond type crystal phase. Typical Si includes a diamond type crystal phase as the Si crystal phase. The Si-based active material may contain a diamond type crystal phase as a main phase of the Si crystal phase.

Other examples of the Si crystal phase may include a silicon clathrate type crystal phase. The silicon clathrate type crystal phase may be a silicon clathrate I type crystal phase, and may be a silicon clathrate II type crystal phase. In the silicon clathrate type crystal phase, plurality of Si atoms form a polyhedron (cage) including pentagons or hexagons. This polyhedron has a space inside to include metal ions such as Li ions. The metal ions are intercalated to this space to inhibit the volume change due to charge and discharge. The Si-based active material may include a silicon clathrate I type crystal phase, and may include a silicon clathrate II type crystal phase, as a main phase of the Si crystal phase. Examples of the method for producing the silicon clathrate type crystal phase may include a method in which a Na-Si alloy is produced by bringing Na and Si into reaction, and then Na is removed from the Na-Si alloy by burning the Na-Si alloy.

The particle sizes $D_{10}$, $D_{50}$, and $D_{90}$ of the primary particle are not particularly limited if it is able to obtain the above described secondary particle. The particle size $D_{10}$ is, for example, 0.1 μm or more and 3.0 μm or less. The particle size $D_{50}$ is, for example, 0.3 μm or more and 5.0 μm or less. The particle size $D_{90}$ is, for example, 0.5 μm or more and 10.0 μm or less.

Examples of the method for forming the porous Si (porous particle) may include a method in which a LiSi alloy is produced by bringing the primary particle (Si-based active material) that is a solid particle into reaction with a metal Li, and then Li is removed from the LiSi alloy. The LiSi alloy may be obtained by, for example, mixing the primary particle (Si-based active material) with the metal Li. The molar ratio of Li with respect to Si, which is Li/Si is, for example, 1.0 or more, may be 2.0 or more, may be 3.0 or more, and may be 4.0 or more. Meanwhile, Li/Si is, for example, 8.0 or less. Examples of the method for removing Li from the LiSi alloy may include a method in which the LiSi alloy is brought into reacting with Li extracting agent. Examples of the Li extracting agent may include alcohol such as methanol, ethanol, 1-propanol, 1-butanol, 1-pentanol, and 1-hexanol; and acid such as acetic acid, formic acid, propionic acid, and oxalic acid.

Other examples of the method for forming the porous particle may include a method in which a MgSi alloy is produced by bringing the primary particle (Si-based active material) that is a solid particle into reaction with a metal Mg, and then Mg is removed from the MgSi alloy. The Mg-Si alloy can be obtained by, for example, heating a mixture of the primary particle (Si-based active material) and the metal Mg. The rate of Mg with respect to Si, which is Mg/Si is, for example, 1.0 or more, may be 1.5 or more, and may be 2.0 or more. Meanwhile, Mg/Si is, for example, 6.0 or less. Examples of the method for removing Mg from the MgSi alloy may include a method in which Mg in the MgSi alloy is changed to MgO by heating the MgSi alloy in an inert gas atmosphere containing oxygen, and then MgO is removed by an acid solution. Examples of the acid solution may include an aqueous solution containing hydrochloric acid (HCl) and hydrogen fluoride (HF).

Examples of the method for producing the above described primary particle (clathrate Si) including the clathrate type crystal phase may include a method in which Si and a Na source such as NaH are mixed and heated to produce a Na-Si alloy, and the Na amount in the Na-Si alloy is reduced by heating the Na-Si alloy to generate the silicon clathrate type crystal phase. Also, the primary particle (porous clathrate Si) including voids and the clathrate type crystal phase may be produced by using the porous Si as the Si.

**2.** Secondary particle

The secondary particle in the present disclosure is a particle in which the above described plurality of primary particle is aggregated. The secondary particle is, for example, a particle in which the plurality of primary particle is aggregated by a binder. In other words, the electrode active material in the present disclosure may contain a binder. Examples of the binder may include a rubber-based binder such as butadiene rubber (BR) and styrene butadiene rubber (SBR), and a fluoride-based binder such as polyvinylidene fluoride (PVdF). In the secondary particle, the proportion of the binder with respect to a total of the plurality of primary particle and the binder is, for example, 1 weight% or more and 30 weight% or less, and may be 5 weight% or more and 25 weight% or less.

Also, the secondary particle may be a sintered body. The sintered body (secondary particle) may contain at least one of a carbide of a saccharide and a carbide of an organic acid inside. Examples of the saccharide may include a monosaccharide such as glucose and fructose, and a disaccharide such as sucrose and maltose. Examples of the organic acid may include formic acid, acetic acid, propionic acid, and butyric acid.

Also, In the secondary particle in the present disclosure, the particle size $D_{10}$ (μm), the particle size $D_{50}$ (μm), and the particle size $D_{90}$ (μm) may satisfy the below formula (4):

$$\text{Formula (4): } (D_{90}-D_{10})/D_{50} < 8.7.$$

The $(D_{90}-D_{10})/D_{50}$ is an index showing a width of distribution in the whole particle based on $D_{50}$. It means that the smaller the value of the $(D_{90}-D_{10})/D_{50}$, the narrower the distribution. The $(D_{90}-D_{10})/D_{50}$ may be 8.0 or less, may be 6.0 or less, may be 5.0 or less, and may be 3.0 or less. Meanwhile, the $(D_{90}-D_{10})/D_{50}$ is, for example, 1.0 or more, may be 1.3 or more, may be 1.5 or more, and may be 2.0 or more.

The particle sizes $D_{10}$, $D_{50}$, and $D_{90}$ of the secondary particle are as described above. Incidentally, the particle size of the secondary particle can be considered as the particle size of the electrode active material.

There are no particular limitations on the method for producing the secondary particle in the present disclosure, and examples thereof may include a spraying drying method. The spraying drying method is a method in which a slurry containing the plurality of primary particle and the binder, and a dispersion medium is sprayed into a hot air to be dried. The particle size of the secondary particle is controlled by, for example, adjusting the particle size of the primary particle, and the conditions of the spraying drying method such as a spraying pressure and a slurry supplying amount. The spraying pressure is, for example, 0.05 MPa or more and 0.5 MPa or less. The slurry supplying amount is, for example, 0.5 g/min or more and 30 g/min or less.

Examples of the method for producing the secondary particle that is a sintered body may also include a method described in Examples.

3. Electrode active material

The electrode active material in the present disclosure is usually used for a battery. The electrode active material may be a cathode active material and may be an anode active material, but the latter is preferable. The reason therefore is to obtain a battery with high capacity.

B. Electrode layer

The electrode layer in the present disclosure contains the above described electrode active material. The electrode active material is in the same contents as those described in "A. Electrode active material" above; thus, the descriptions herein are omitted.

According to the present disclosure, the above described electrode active material is included, and thus the volume change of the electrode layer is suppressed and the generation of cracks is suppressed therein.

The proportion of the electrode active material in the electrode layer is, for example, 20 weight% or more, may be 30 weight% or more and may be 40 weight% or more. If the proportion of the electrode active material is too little, there is a possibility that sufficient energy density may not be obtained. Meanwhile, the proportion of the electrode active material in the electrode layer is, for example, 80 weight% or less, may be 70 weight% or less and may be 60 weight% or less. If the proportion of the electrode active material is too much, there is a possibility that the ion conductivity and the electron conductivity in the electrode layer may be degraded.

The electrode layer in the present disclosure may contain at least one of a solid electrolyte, a conductive material, and a binder, as required.

Examples of the solid electrolyte may include an inorganic solid electrolyte such as a sulfide solid electrolyte, an oxide solid electrolyte, and a halide solid electrolyte. The sulfide solid electrolyte preferably contains sulfur (S) as a main component of the anion element. The oxide solid electrolyte preferably contains oxygen (O) as a main component of the anion element. The halide solid electrolyte preferably contains a halogen (at least one kind of F, Cl, Br, and I) as a main component of the anion. Among these, a sulfide solid electrolyte is preferable. The reason therefor is its high ion conductivity.

The sulfide solid electrolyte may further contain an X element (X is at least one kind of As, Sb, Si, Ge, Sn, B, Al, Ga, and In). Also, the sulfide solid electrolyte may further contain at least one of an O element and a halogen element.

The sulfide solid electrolyte preferably includes a $PS_4^{3-}$ structure that is an ortho composition as a main component of the anion structure. The reason therefor is that chemical stability is high. The proportion of the $PS_4^{3-}$ structure with respect to all the anion structures in the sulfide solid electrolyte is, for example, 70 mol% or more and may be 90 mol% or more.

Examples of the sulfide solid electrolyte may include $Li_2S-P_2S_5$, $Li_2S-P_2S_5-LiI$, $Li_2S-P_2S_5-GeS_2$, $Li_2S-P_2S_5-Li_2O$, $Li_2S-P_2S_5-Li_2O-LiI$, $Li_2S-P_2S_5-LiI-LiBr$, $Li_2S-SiS_2-P_2S_5-LiI$, $Li_2S-P_2S_5-Z_mS_n$ (provided that m, n is a positive number, and Z is any of Ge, Zn, and Ga), and $Li_2S-SiS_2-Li_3PO_4$.

The sulfide solid electrolyte may be glass (amorphous), may be crystallized glass (glass ceramic), and may be a crystalline sulfide solid electrolyte. Examples of the crystal phase of the crystalline sulfide solid electrolyte may include a Thio-LISICON type crystal phase, a LGPS type crystal phase, and an argyrodite type crystal phase.

Additional examples of the solid electrolyte may include an organic solid electrolyte such as a polymer electrolyte and a gel electrolyte.

The proportion of the solid electrolyte in the electrode layer is, for example, 10 weight% or more and 60 weight% or less. If the rate of the solid electrolyte is too little, there is a possibility that the ion conduction path in the electrode layer may be insufficient. If the rate of the solid electrolyte is too much, the rate of the electrode active material would be relatively little, and there is a possibility the energy density may decrease.

Examples of the conductive material may include a carbon material, a metal particle, and a conductive polymer. Examples of the carbon material may include a particulate carbon material such as acetylene black (AB) and Ketjen black (KB), and a fiber carbon material such as carbon fiber, carbon nanotube (CNT), and carbon nanofiber (CNF). The proportion of the conductive material in the electrode layer is, for example, 0.1 weight% or more and 10 weight% or less.

Examples of the binder may include a rubber-based binder such as butylene rubber (BR) and styrene butadiene rubber (SBR), and a fluoride-based binder such as polyvinylidene fluoride (PVDF). The proportion of the binder in the electrode layer is, for example, 0.5 weight% or more and 5 weight% or less.

The electrode layer in the present disclosure is usually used for a battery. The electrode layer may be a cathode layer and may be an anode layer, but the latter is preferable. The reason therefore is to obtain a battery with high capacity.

The thickness of the electrode layer is, for example, 0.1 $\mu$m or more and 1000 $\mu$m or less.

C. Battery

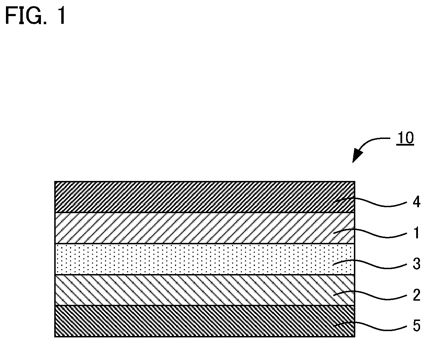

FIG. 1 is a schematic cross-sectional view exemplifying the battery in the present disclosure. Battery 10 shown in FIG. 1 includes cathode layer 1, anode layer 2, electrolyte layer 3 arranged between the cathode layer 1 and the anode layer 2, cathode current collector 4 for collecting currents of the cathode layer 1, and anode current collector 5 for collecting currents of the anode layer 2. In the present disclosure, one of the cathode layer 1 and the anode layer 2 includes the electrode active material described in "A. Electrode active material".

According to the present disclosure, by using the above described electrode active material, cracking of the electrode layer is suppressed, and as a result, increase of the resistance is suppressed and the degrade in cycle characteristics is suppressed in the battery. As described above, it is preferable that the above described electrode active material is an anode active material, that is, the anode layer contains the above described electrode active material. The details of the battery in which the anode layer contains the above described electrode active material will be hereinafter described.

1. Anode layer

The anode layer is a layer containing at least an anode active material. The anode active material and the anode layer are in the same contents as those described in "A. Electrode active material" and "B. Electrode layer". Incidentally, when the later described electrode layer contains a liquid electrolyte, the anode layer may contain the later described liquid electrolyte as the electrolyte.

2. Cathode layer

The cathode layer is a layer containing at least a cathode active material. Also, the cathode layer may contain at least one of an electrolyte, a conductive material, and a binder, as required. The conductive material and the binder are in the same contents as those described in "B. Electrode layer". Also, the electrolyte will be described in "3. Electrolyte layer".

Examples of the cathode active material may include an oxide active material. Examples of the oxide active material may include a rock salt bed type active material such as $LiCoO_2$, $LiMnO_2$, $LiNiO_2$, $LiVO_2$, and $LiNi_{1/3}Co_{1/3}Mn_{1/3}O_2$; a spinel type active material such as $LiMn_2O_4$, $Li_4Ti_5O_{12}$, and $Li(Ni_{0.5}Mn_{1.5})O_4$; and an olivine type active material such as $LiFePO_4$, $LiMnPO_4$, $LiNiPO_4$, and $LiCoPO_4$.

A coating layer containing Li-ion conductive oxide may be formed on the surface of the oxide active material. The reason therefor is to inhibit the reaction of the oxide active material and the solid electrolyte (particularly a sulfide solid electrolyte). Examples of the Li-ion conductive oxide may include $LiNbO_3$. The thickness of the coating layer is, for example, 1 nm or more and 30 nm or less. Also, as the cathode active material, for example, $Li_2S$ can be used.

Examples of the shape of the cathode active material may include a granular shape. The average particle size ($D_{50}$) of the cathode active material is not particularly limited, and for example, it is 10 nm or more, and may be 100 nm or more. Meanwhile, the average particle size ($D_{50}$) of the cathode active material is, for example, 50 $\mu$m or less, and may be 20 $\mu$m or less. The $D_{50}$ is as described above.

The proportion of the cathode active material in the cathode layer is, for example, 20 weight% or more and 80 weight% or less. The thickness of the cathode layer is, for example, 0.1 $\mu$m or more and 1000 $\mu$m or less.

3. Electrolyte layer

The electrolyte layer is a layer formed between the cathode layer and the anode layer, and contains at least an electrolyte. Also, the electrolyte layer may contain a binder as required. The binder is in the same contents as those described in "B. Electrode layer".

The electrolyte may be a solid electrolyte and may be an electrolyte solution (liquid electrolyte). Examples of the solid electrolyte may include solid electrolytes described in "B. Electrode layer".

The liquid electrolyte preferably contains a supporting salt and a solvent. Examples of the supporting salt (lithium salt) of the electrolyte including lithium ion conductivity may include an inorganic lithium salt such as $LiPF_6$, $LiBF_4$, $LiClO_4$, and $LiAsF_6$; and an organic lithium salt such as $LiCF_3SO_3$, $LiN(CF_3SO_2)_2$, $LiN(C_2F_5SO_2)_2$, $LiN(FSO_2)_2$, and $LiC(CF_3SO_2)_3$. Examples of the solvent used for the electrolyte may include a cyclic ester (cyclic carbonate) such as ethylene carbonate (EC), propylene carbonate (PC) and butylene carbonate (BC); and a chain ester (chain carbonate) such as dimethyl carbonate (DMC), diethyl carbonate (DEC), and ethyl methyl carbonate (EMC).

The electrolyte layer may be a solid electrolyte layer containing a solid electrolyte. Also, the electrolyte layer may be a layer in which the separator is impregnated with the above described liquid electrolyte. The material of the separator may be an organic material, and may be an inorganic material. Specific examples thereof may include a porous film such as polyethylene (PE), polypropylene (PP), cellulose, polyvinylidene fluoride, polyamide, and polyimide; unwoven fabric such as a resin unwoven fabric and a glass fiber unwoven fabric; and a ceramic porous film. Also, the separator may be a single layer structure, and may be a multilayer structure.

4. Other constitutions

The battery in the present disclosure preferably includes a cathode current collector for collecting currents of the cathode layer, and an anode current collector for collecting currents of the anode layer. Examples of the material for the cathode current collector may include SUS, aluminum, nickel, iron, titanium, and carbon. Meanwhile, examples of the material for the anode current collector may include SUS, copper, nickel, and carbon.

The battery in the present disclosure may further include a restraining jig that applies a restraining pressure along with the thickness direction of the cathode layer, the electrolyte layer and the anode layer. In particular, when the electrolyte layer is a solid electrolyte layer, it is preferable to apply a restraining pressure to form excellent ion conducting path and electron conducting path. The restraining pressure is, for example, 0.1 MPa or more, may be 1 MPa or more, and may be 5 MPa or more. Meanwhile, the restraining pressure is, for example, 100 MPa or less, may be 50 MPa or less, and may be 20 MPa or less.

5. Battery

The kind of the battery in the present disclosure is not particularly limited, but is typically a lithium ion battery. Also, the battery in the present disclosure may be a liquid battery in which the electrolyte layer contains a liquid electrolyte, and may be a solid state battery in which the electrolyte layer contains a solid electrolyte. The solid state battery may be a semisolid state battery and may be an all solid state battery. In the present disclosure, the semisolid state battery is a battery in which the electrolyte layer includes a solid electrolyte and a liquid component (such as ionic solution). In the present disclosure, the all solid state battery is a battery in which the electrolyte layer includes only the inorganic solid electrolyte as the electrolyte. Also, the battery in the present disclosure may be a primary battery and may be a secondary battery, but preferably a secondary battery among them. The reason therefor is to be repeatedly charged and discharged and useful as a car-mounted battery for example.

Examples of the applications of the battery may include a power source for vehicles such as hybrid electric vehicles (HEV), plug-in hybrid electric vehicles (PHEV), battery electric vehicles (BEV), gasoline-fueled automobiles and diesel powered automobiles. In particular, it is preferably used as a power source for driving hybrid electric vehicles (HEV), plug-in hybrid electric vehicles (PHEV), and battery electric vehicles (BEV). Also, the battery may be used as a power source for moving bodies other than vehicles (such as rail road transportation, vessel and airplane), and may be used as a power source for electronic products such as information processing equipment.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

Examples

[Example 1]

<Production of primary particle>

Si particles (from Kojundo Chemical Laboratory Co., Ltd.) 0.65 g and Li metal (from Honjo Metal Co., Ltd.) 0.60 g were mixed by an agate mortar under an Ar atmosphere to obtain a LiSi precursor. In a glass reactor under an Ar atmosphere, the LiSi precursor 1.0 g, and a dispersion medium (1,3,5-trimethyl benzene from NACALAI TESQUE, INC.) 125 ml were mixed using an ultrasonic homogenizer (UH-50 from SMT Corporation). The obtained LiSi precursor dispersion solution after mixing was cooled to 0°C, ethanol (from NACALAI TESQUE, INC.) 125 ml as a Li extracting solvent was dropped and reacted for 120 minutes. After the reaction, acetic acid (from NACALAI TESQUE, INC.) 50 ml was further dropped and reacted for 60 minutes. After the reaction, a solution and a solid reactant were separated by sucking filtration. The obtained solid reactant was vacuum-dried at 120°C for 2 hours to collect a porous primary particle (porous Si).

<Production of secondary particle (non-sintered body)>

The obtained primary particle (porous Si) and a PVDF-HFP-based binder (from KUREHA CORPORATION) were dispersed in dimethyl carbonate (from NACALAI TESQUE, INC.) so as to be in the ratio of the primary particle : the binder = 100 : 13.3 (weight ratio), dissolved partially, and thereby a slurry was obtained. This slurry was sprayed in a spray drier of a nitrogen gas atmosphere at 140°C and dried (spraying drying method). By adjusting the spraying pressure and the slurry supplying amount in the spraying drying method, secondary particles (non-sintered body) having the particle sizes ($D_{10}$, $D_{50}$, $D_{90}$) as shown in Table 1 were obtained.

<Production of evaluation battery>

As described later, an evaluation battery was produced using the above described secondary particle as the anode active material.

The secondary particle 1.0 g, a conductive material (VGCF from SHOWA DENKO K.K) 0.04 g, a sulfide solid electrolyte (LiI-LiBr-$Li_3PS_4$-based sulfide solid electrolyte, $D_{50}$ = 0.2 $\mu$m) 0.776 g, a binder (PVdF from KUREHA CORPORATION) 0.02 g, and butyl butyrate (from KISHIDA CHEMICAL CO.,LTD.) 1.7 g were mixed using an ultrasonic homogenizer (UH-50 from SMT Corporation), and thereby an anode slurry was produced. This anode slurry was applied on an anode current collector (Cu foil) by a blade method, and dried in the conditions of 100°C for 30 minutes on a hot plate. Thereby, an anode including an anode current collector and an anode layer was obtained.

Next, a cathode active material ($LiNi_{0.8}Co_{0.15}Mn_{0.05}O_2$) 1.5 g, a conductive material (VGCF, from SHOWA DENKO K.K) 0.023 g, a sulfide solid electrolyte (LiI-LiBr-$Li_3PS_4$-based sulfide solid electrolyte, $D_{50}$ = 0.2 $\mu$m) 0.239 g, a binder (PVdF from KUREHA CORPORATION) 0.011 g, and butyl butyrate (from KISHIDA CHEMICAL CO.,LTD.) 0.8 g were mixed using an ultrasonic homogenizer (UH-50 from SMT Corporation), and thereby a cathode slurry was produced. This cathode slurry was applied on a cathode current collector (Al foil) by a blade method, and dried in the conditions of 100°C for 30 minutes on a hot plate. Thereby, a cathode including a cathode current collector and a cathode layer was obtained.

Next, a sulfide solid electrolyte (LiI-LiBr-$Li_3PS_4$-based sulfide solid electrolyte), a binder (PVdF, from KUREHA CORPORATION), and a dispersion medium (butyl butyrate) were dispersed by an ultrasonic dispersion device, and thereby a slurry for solid electrolyte layer was produced. This slurry was applied on a transferring foil (Al foil) by a blade method, and dried in the conditions of 100°C for 30 minutes on a hot plate. Thereby, a transferring foil including a solid electrolyte layer was obtained.

The cathode and the transferring foil were layered so that the cathode layer and the solid electrolyte layer faced to each other. After pressing the product with a pressing pressure of 50 kN/cm and a temperature of 160°C by a roll pressing machine, the solid transferring foil (Al foil) was peeled off and punched out into a size of 1 cm$^2$. Thereby, a cathode layered body was obtained. Next, the anode and the transferring foil were layered so that the anode layer and the solid electrolyte layer faced to each other. After pressing the product with a pressing pressure of 50 kN/cm by a roll pressing machine, the transferring foil (Al foil) was peeled off. Thereby, an anode layered body was obtained. Further, a transferring foil was layered so that the solid electrolyte layer faced to the solid electrolyte layer side of the anode layered body. This layered body was temporary pressed at a pressing pressure of 100 MPa and a temperature of 25°C with a plane uniaxial pressing machine, and then the transferring foil (Al foil) was peeled off from the solid electrolyte layer, punched out into a size of 1.08 cm$^2$, and thereby an anode layered body including an additional solid electrolyte layer was obtained.

The cathode layered body and the anode layered body including the additional solid electrolyte layer were layered so as to face to each other. This layered body was pressed at a pressing pressure of 600 MPa and a temperature of 160°C with a plane uniaxial pressing machine, and thereby a battery layered body was obtained. The obtained battery layered body was sandwiched between two pieces of restraining plates, the two pieces of restraining plates were restrained by a restraining jig at a restraining pressure of 1 MPa to fix the distance between the two pieces of restraining plates. Thereby, an evaluation battery (all solid state battery) was obtained.

[Examples 2 to 5 and Comparative Examples 1 to 6]

In the production of the secondary particle, secondary particles having the particle sizes as shown in Table 1 were obtained by adjusting the conditions of the spraying drying method (at least one of spraying pressure and slurry supplying amount). Evaluation batteries were produced in the same manner as in Example 1 except that these secondary particles were used as the anode active material.

[Example 6]

<Production of secondary particle (sintered body)>

A solid Si particle ($SiO_x$ (from Kojundo Chemical Laboratory Co., Ltd.)) and fructose were dispersed in water in a ratio (weight ratio) of the Si particle : the fructose = 100 : 7.4, partially dissolved, and thereby a slurry was obtained. This slurry was sprayed in a spray drier at 200°C and dried (spraying drying method). A secondary particle having the particle sizes ($D_{10}$, $D_{50}$, $D_{90}$) as shown in Table 1 were obtained by adjusting the spraying pressure and the slurry supplying amount in the spraying drying method.

Next, a secondary particle that is a sintered body was produced in the following manner.

The obtained secondary particle was burned in Ar at 700°C for 6 hours to carbonize fructose. The carbonized secondary particle 1.5 g and $Mg_2Si$ (from Kojundo Chemical Laboratory Co., Ltd.) 2.61 g were burned at 80 MPa and 700°C for 6 hours for reduction. After that, a hydrochloric acid was used to wash and remove the MgO, and thereby the primary particle in the secondary particle was made into porous. After the washing, a solution and a solid reactant were separated by sucking filtration. The obtained solid reactant (sintered body) was vacuum-dried at 120°C for 12 hours and collected.

<Production of evaluation battery>

An evaluation battery was produced in the same manner as in Example 1 except that the collected sintered body was used as the anode active material.

[Examples 7 to 10 and Comparative Example 7]

A secondary particle having the particle sizes ($D_{10}$, $D_{50}$, $D_{90}$) as shown in Table 1 were obtained by adjusting the spraying pressure and the slurry supplying amount in the spraying drying method. The obtained secondary particle was burned in the same manner as in Example 6, and thereby a sintered body was obtained. An evaluation battery was produced in the same manner as in Example 1 except that the sintered body was used as the anode active material.

[Evaluation]

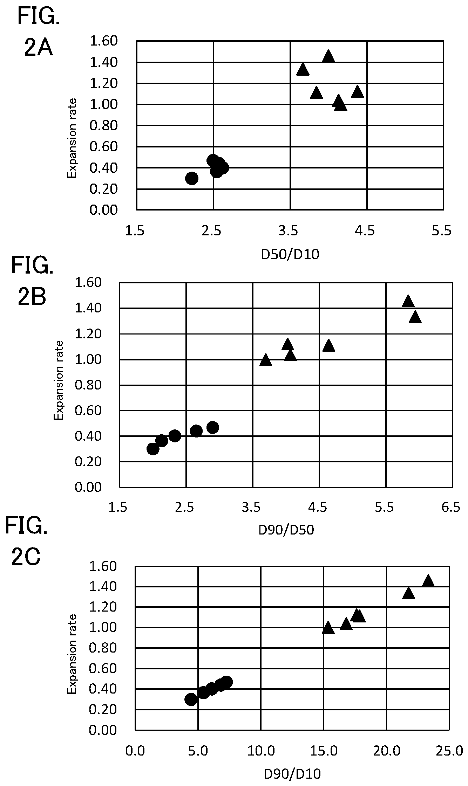

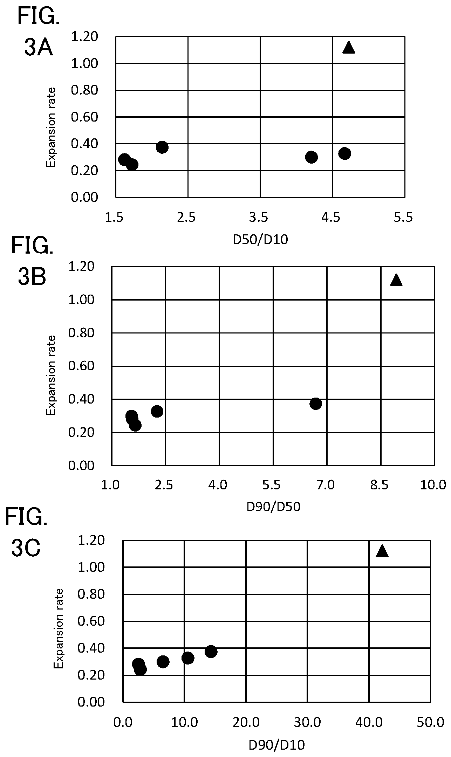

The batteries obtained in Examples 1 to 10 and Comparative Examples 1 to 7 were CC/CV charged at 0.245 mA until 4.55 V, and then CC/CV discharged at 0.245 mA until 3.0 V. On this occasion, as the expansion rate, the change in restraining pressure (ΔMPa/mAh) per battery capacity was respectively obtained. Evaluation was relatively performed based on the restraining pressure change amount of Comparative Example 1. The results are shown in Table 1, FIG. 2 and FIG. 3. Incidentally, FIGS. 2A to C respectively show the result of Comparative Examples 1 to 6 and Examples 1 to 5, and FIGS. 3A to C respectively show the result of Comparative Example 7 and Examples 6 to 10. Also, in FIG. 2 and FIG. 3, Examples are indicated in circles, and Comparative Examples are indicated in triangles.

[Table 1]

| | $D_{10}$ ($\mu$m) | $D_{50}$ ($\mu$m) | $D_{90}$ ($\mu$m) | $D_{50}/D_{10}$ | $D_{90}/D_{50}$ | $D_{90}/D_{10}$ | Expansion rate (relative value) |
|---|---|---|---|---|---|---|---|
| Comp. Ex. 1 | 0.6 | 2.4 | 14.0 | 4.0 | 5.8 | 23.3 | 1.46 |
| Comp. Ex. 2 | 0.9 | 3.3 | 19.6 | 3.7 | 5.9 | 21.8 | 1.34 |
| Comp. Ex. 3 | 2.9 | 12.7 | 51.1 | 4.4 | 4.0 | 17.6 | 1.12 |
| Comp. Ex. 4 | 1.3 | 5.0 | 23.2 | 3.8 | 4.6 | 17.8 | 1.11 |
| Comp. Ex. 5 | 1.5 | 6.2 | 25.2 | 4.1 | 4.1 | 16.8 | 1.04 |
| Comp. Ex. 6 | 2.5 | 10.4 | 38.4 | 4.2 | 3.7 | 15.4 | 1.00 |
| Example 1 | 0.8 | 2.0 | 5.8 | 2.5 | 2.9 | 7.3 | 0.47 |
| Example 2 | 2.8 | 7.2 | 19.1 | 2.6 | 2.7 | 6.8 | 0.44 |
| Example 3 | 2.9 | 7.6 | 17.7 | 2.6 | 2.3 | 6.1 | 0.40 |
| Example 4 | 10.4 | 26.5 | 56.5 | 2.5 | 2.1 | 5.4 | 0.36 |
| Example 5 | 2.7 | 6.0 | 12.0 | 2.2 | 2.0 | 4.4 | 0.30 |
| Comp. Ex. 7 | 1.8 | 8.5 | 75.9 | 4.7 | 8.9 | 42.2 | 1.12 |
| Example 6 | 6.6 | 11.4 | 18.9 | 1.7 | 1.7 | 2.9 | 0.24 |

(continued)

| | $D_{10}$ ($\mu$m) | $D_{50}$ ($\mu$m) | $D_{90}$ ($\mu$m) | $D_{50}/D_{10}$ | $D_{90}/D_{50}$ | $D_{90}/D_{10}$ | Expansion rate (relative value) |
|---|---|---|---|---|---|---|---|
| Example 7 | 5.3 | 8.6 | 13.5 | 1.6 | 1.6 | 2.5 | 0.28 |
| Example 8 | 4.9 | 10.5 | 70.2 | 2.1 | 6.7 | 14.3 | 0.37 |
| Example 9 | 2.1 | 9.8 | 22.2 | 4.7 | 2.3 | 10.6 | 0.33 |
| Example 10 | 2.4 | 10.1 | 15.7 | 4.2 | 1.6 | 6.5 | 0.30 |

As shown in Table 1 and FIGS. 2 to 3, it was confirmed that the expansion rate was remarkably suppressed and the volume change of the electrode layer was suppressed in the batteries using the electrode active material in the present disclosure. Also, the expansion rate of Example 7 ($D_{90}/D_{10}$ = 2.5) was larger than the expansion rate ($D_{90}/D_{10}$ = 2.9) of Example 6, and it was presumed that, surprisingly, the expansion rate tends to increase when the $D_{90}/D_{10}$ becomes too small. For this reason, it is presumed that the $D_{90}/D_{10}$ is preferably 2.0 or more, and more preferably 2.5 or more.

Reference Sings List

1      cathode layer
2      anode layer
3      electrolyte layer
4      cathode current collector
5      anode current collector
10     battery

**Claims**

1.  An electrode active material **characterized by** comprising a secondary particle that is an aggregation of a plurality of primary particle, wherein

    the primary particle is a Si-based active material containing a Si element, and
    a particle size $D_{10}$ ($\mu$m) and a particle size $D_{50}$ ($\mu$m) of the secondary particle satisfy the below formula (1):

    $$\text{Formula (1): } D_{50}/D_{10} < 3.7.$$

2.  An electrode active material **characterized by** comprising a secondary particle that is an aggregation of a plurality of primary particle, wherein

    the primary particle is a Si-based active material containing a Si element, and
    a particle size $D_{50}$ ($\mu$m) and a particle size $D_{90}$ ($\mu$m) of the secondary particle satisfy the below formula (2):

    $$\text{Formula (2): } D_{90}/D_{50} < 3.7.$$

3.  An electrode active material **characterized by** comprising a secondary particle that is an aggregation of a plurality of primary particle, wherein

    the primary particle is a Si-based active material containing a Si element, and
    a particle size $D_{10}$ ($\mu$m) and a particle size $D_{90}$ ($\mu$m) of the secondary particle satisfy the below formula (3):

    $$\text{Formula (3): } D_{90}/D_{10} < 15.4.$$

4.  The electrode active material according to claim 1, **characterized in that** the $D_{50}/D_{10}$ is 1.6 or more in the formula (1).

5.  The electrode active material according to claim 2, **characterized in that** the $D_{90}/D_{50}$ is 1.6 or more in the formula (2).

6. The electrode active material according to claim 3, **characterized in that** the $D_{90}/D_{10}$ is 2.5 or more in the formula (3).

7. The electrode active material according to any one of claims 1 to 3, **characterized in that** the primary particle is a porous particle.

8. The electrode active material according to any one of claims 1 to 3, **characterized in that** the secondary particle is a particle in which the plurality of primary particle is aggregated by a binder.

9. The electrode active material according to any one of claims 1 to 3, **characterized in that** the secondary particle is a sintered body.

10. An electrode layer **characterized by** comprising the electrode active material according to any one of claims 1 to 3.

11. The electrode layer according to claim 10, **characterized in that** the electrode layer is an anode layer.

12. A battery comprising a cathode layer, an anode layer, and an electrolyte layer arranged between the cathode layer and the anode layer, **characterized in that**
one of the cathode layer and the anode layer contains the electrode active material according to any one of claims 1 to 3.

13. The battery according to claim 12, **characterized in that** the electrolyte layer is a solid electrolyte layer.

FIG. 1

FIG.
2A

FIG.
2B

FIG.
2C

FIG.
3A

FIG.
3B

FIG.
3C

Europäisches
Patentamt

European
Patent Office

Office européen
des brevets

**EUROPEAN SEARCH REPORT**

Application Number

EP 25 20 3061

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 379 851 A1 (PANASONIC IP MAN CO LTD [JP]) 5 June 2024 (2024-06-05) * paragraphs [0045], [0111] - [0117]; claims 1-19; figures 1-5 * ----- | 1-13 | INV. H01M4/134 H01M4/38 H01M10/0525 |
| A | US 2018/212234 A1 (HAUFE STEFAN [DE]) 26 July 2018 (2018-07-26) * paragraphs [0011] - [0021]; claims 1-24 * ----- | 1-13 | |

TECHNICAL FIELDS
SEARCHED (IPC)

H01M

The present search report has been drawn up for all claims

| Place of search | Date of completion of the search | Examiner |
|---|---|---|
| Munich | 2 February 2026 | Szekely, Noemi Kinga |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 ..............................................................................................

& : member of the same patent family, corresponding
document

EPO FORM 1503 03.82 (P04C01)

**EP 4 718 523 A1**

## ANNEX TO THE EUROPEAN SEARCH REPORT
## ON EUROPEAN PATENT APPLICATION NO.

EP 25 20 3061

02-02-2026

| Patent document cited in search report | | Publication date | Patent family member(s) | | Publication date |
|---|---|---|---|---|---|
| EP 4379851 | A1 | 05-06-2024 | CN | 117730431 A | 19-03-2024 |
| | | | EP | 4379851 A1 | 05-06-2024 |
| | | | JP | WO2023007939 A1 | 02-02-2023 |
| | | | US | 2024154091 A1 | 09-05-2024 |
| | | | WO | 2023007939 A1 | 02-02-2023 |
| US 2018212234 | A1 | 26-07-2018 | CN | 107925072 A | 17-04-2018 |
| | | | DE | 102015215415 A1 | 16-02-2017 |
| | | | EP | 3335262 A1 | 20-06-2018 |
| | | | JP | 6790070 B2 | 25-11-2020 |
| | | | JP | 2018530859 A | 18-10-2018 |
| | | | KR | 20180035915 A | 06-04-2018 |
| | | | US | 2018212234 A1 | 26-07-2018 |
| | | | WO | 2017025346 A1 | 16-02-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024017797 A